# FASCICULE DE BREVET EUROPEEN

(11) **EP 1 135 725 B1**
(45) Date de publication et mention de la délivrance du brevet: **29.01.2003**
(21) Numéro de dépôt: 99956125.1
(22) Date de dépôt: 23.11.1999
(51) Int. Cl.: G06F 11/00, G06F 9/46, G07B 17/04

(54) **DISPOSITIF ET PROCEDE DE DETECTION DE DEBORDEMENT DE PILE DANS UNE MEMOIRE ET MACHINE A AFFRANCHIR LES METTANT EN OEUVRE**
VORRICHTUNG UND VERFAHREN ZUM SCHUTZ GEGEN STAPELÜBERLAUF IN EINEM SPEICHER UND ANWENDUNG DERSELBEN AN EINER FRANKIERMASCHINE
DEVICE AND METHOD FOR DETECTING STACK OVERFLOW IN A STORAGE UNIT AND FRANKING MACHINE USING THE SAME

(30) Priorité: 24.11.1998 FR 9814775
(43) Date de publication de la demande: 26.09.2001
(73) Titulaire: SECAP, 92100 Boulogne Billancourt (FR); Ascom Autelca AG, 3018 Bern-Bumpliz (CH)
(72) Inventeur: DERY, Jean-Marc, F-92600 Asnières (FR); L'HOTE, Frédéric, F-75015 Paris (FR)
(74) Mandataire: Rinuy, Santarelli
(86) Numéro de dépôt international: FR9902883
(87) Numéro de publication internationale: WO00031637

(56) Documents cités:
- US-A- 5 613 063
- US-A- 5 727 178
- US-A- 5 771 348
- WILKEN K D ET AL: "CONCURRENT DETECTION OF SOFTWARE AND HARDWARE DATA-ACCESS FAULTS" IEEE TRANSACTIONS ON COMPUTERS, vol. 46, no. 4, 1 avril 1997 (1997-04-01), pages 412-424, XP000656017 ISSN: 0018-9340

## Description

La présente invention se rapporte à un dispositif et un procédé de détection de débordement de pile dans une mémoire et une machine à affranchir les mettant en oeuvre.

Elle s'applique en particulier aux machines à affranchir dotées d'un programme s'exécutant dans un environnement multi-tâches.

L'exécution correcte de chaque tâche d'un programme doit être garantie. On entend par exécution correcte, le fait qu'une tâche s'exécute dans sa pile. La pile d'une tâche correspond à un espace mémoire qui lui est réservé. En d'autres termes, l'invention vise à contrôler que la mémoire utilisée par une tâche se limite à l'espace mémoire qui lui est alloué.

Dans les programmes multi-tâches utilisant des mémoires électroniques actuellement connus, aucune certification de non-débordement de pile d'une tâche n'est prévue.

L'article de K.D. WILKEN et al. intitulé "Concurrent Detection of Software and Hardware Data-Access Faults" publié dans IEEE Transactions on Computers, vol. 46, n° 4, 1^{er} avril 1997, se rapporte à la détection d'erreurs dans l'accès à des données, au plan logiciel et au plan matériel. Cependant, ce document n'enseigne pas comment détecter le débordement d'une pile mémoire à chaque changement de contexte.

Dans le cas des machines à affranchir, les tâches peuvent gérer des sommes d'argent ou des données dont la valeur doit rester intègre. Il est donc indispensable de garantir qu'aucune pile ne déborde au delà de l'espace mémoire qui lui a été alloué.

A cet effet, la présente invention vise à vérifier pendant chaque changement de contexte au sein du programme que la pile de la nouvelle tâche est intègre. Ce contrôle d'intégrité de la pile est fait en contrôlant les premiers octets de la pile par rapport à une valeur prédéfinie. Si ces octets de la pile possèdent une valeur inattendue, la pile est considérée comme violée et l'exécution d'au moins une tâche du programme est arrêtée.

Ainsi, selon l'invention, on dédie un certain nombre d'octets au début de chaque pile à la détection du débordement. Toutes les piles se succédant dans un espace mémoire, le noyau multitâches vérifie la valeur des octets dédiés à la détection du débordement pour chaque tâche qui va s'exécuter. Ainsi, si une pile déborde, elle modifie la valeur des octets dédiés à la détection du débordement de la pile suivante. Dès que le noyau multitâches détecte cette modification, l'exécution d'au moins une des tâches concernées par la pile ayant débordé ou par la pile vers laquelle a eu lieu le débordement, est arrêtée.

A cet effet, à chaque changement de contexte, une routine de programme est mise en oeuvre pour vérifier la valeur des octets dédiés à la détection de débordement correspondant à la pile attachée à la prochaine tâche qui va s'exécuter.

Selon un premier aspect, la présente invention vise un procédé de détection de débordement de pile selon la revendication 1.

Selon ce premier aspect, la présente invention vise également un procédé de détection de débordement de pile selon la revendication 2.

Ainsi, si la pile à laquelle a été attribuée une partie de mémoire déborde, c'est nécessairement dans l'ordre des écritures qui y sont faites et donc, à partir d'un certain nombre d'écritures en débordement, les valeurs prédéterminées conservées dans la partie de mémoire sont modifiées par écriture (ou "écrasement").

On observe que l'invention couvre aussi bien le cas où c'est au début de l'exécution d'une tâche ou en fin de cycle d'exécution d'une tâche que la vérification de l'intégrité des octets dédiés à la détection du débordement est effectuée.

Le procédé de l'invention s'applique particulièrement efficacement aux programmes multitâches.

Selon des caractéristiques particulières, au cours de l'opération d'attribution, la partie de mémoire associée à une pile lui est mitoyenne.

Grâce à ces dispositions, le moindre débordement de pile est détecté.

Selon des caractéristiques particulières, au cours de l'opération d'attribution, la partie de mémoire associée à une pile est mitoyenne de la pile suivante, dans l'ordre d'écriture de la pile à laquelle est associée ladite partie de mémoire.

Grâce à ces dispositions, seul un débordement de pile qui pourrait perturber la pile suivante est détecté, ce qui laisse une plus grande souplesse à la gestion de la pile surveillée.

Selon des caractéristiques particulières, les opérations de lecture et de vérification sont effectuées par une routine dudit programme.

Grâce à ces dispositions, la mise en oeuvre de l'invention est particulièrement aisée.

Selon des caractéristiques particulières, lesdites valeurs prédéterminées sont égales entre elles.

Grâce à ces dispositions, l'opération de vérification est particulièrement simple puisqu'elle consiste à comparer chaque valeur lue avec la valeur prédéterminée.

Selon des caractéristiques particulières, lesdites valeurs prédéterminées sont différentes de toutes les valeurs prises par les codes informatiques dudit programme ou de toutes les valeurs utilisées dans les piles.

Grâce à ces dispositions, il est impossible que le débordement de la pile ne résulte en une écriture d'une valeur prédéterminée dans la partie de mémoire lue.

Selon des caractéristiques particulières, lorsque au cours de l'opération de vérification, il est déterminé qu'au moins une valeur lue a été modifiée, au cours d'une opération de modification de programme, la mise en oeuvre de chaque partie de programme relative à la pile associée à la partie de mémoire qui a été lue est suspendue.

Selon d'autres caractéristiques particulières, lorsque, au cours de l'opération de vérification, il est déterminé qu'au moins une valeur lue a été modifiée, au cours d'une opération de modification de programme, la mise en oeuvre de chaque partie de programme relative à la pile qui succède, dans l'ordre d'écriture des piles, à la pile associée à la partie de mémoire lue, est suspendue.

Grâce à chacune de ces dispositions, les conséquences du débordement de pile sont limitées.

Selon un deuxième aspect, la présente invention vise des dispositifs de détection de débordement de pile conformes aux revendications 9 et 10.

L'invention vise, aussi, une machine à affranchir, caractérisée en ce qu'elle comporte l'un quelquonque de ces dispositifs.

Ces dispositifs et cette machine à affranchir présentant les mêmes avantages que les procédés succinctement exposé ci-dessus, ceux-ci ne sont pas rappelés ici.

D'autres avantages, buts et caractéristiques ressortiront de la description qui va suivre, faite en regard des dessins annexés dans lesquels :
- la figure 1 représente, une machine à affranchir mettant en oeuvre le dispositif et le procédé de détection de débordement de pile objets de la présente invention,
- la figure 2 représente, schématiquement, un circuit électronique incorporé dans la machine à affranchir illustrée en figure 1,
- les figures 3A et 3B représentent des organisations de mémoire conforme à la présente invention, respectivement avant et après la détection d'un débordement de pile, et
- la figure 4 représente un diagramme de fonctionnement du circuit électronique illustré en figure 2.

La machine à affranchir 1 illustrée sur les dessins comporte un dispositif pour imprimer, sur un objet plat tel que la lettre 2, d'une part, une marque d'affranchissement et, éventuellement, une adresse de destination de l'enveloppe.

Pour imprimer la marque d'affranchissement sur l'emplacement normalisé prévu à cet effet, il faut faire passer la lettre 2 dans un couloir 5 que comporte la machine 1, ce couloir étant délimité par des éléments solidaires du bâti, respectivement un support de glissement 6 qui forme le plafond du couloir 5, une table 7 qui en forme le plancher et une rampe qui en forme une limite latérale, le couloir étant ouvert à l'opposé de cette rampe.

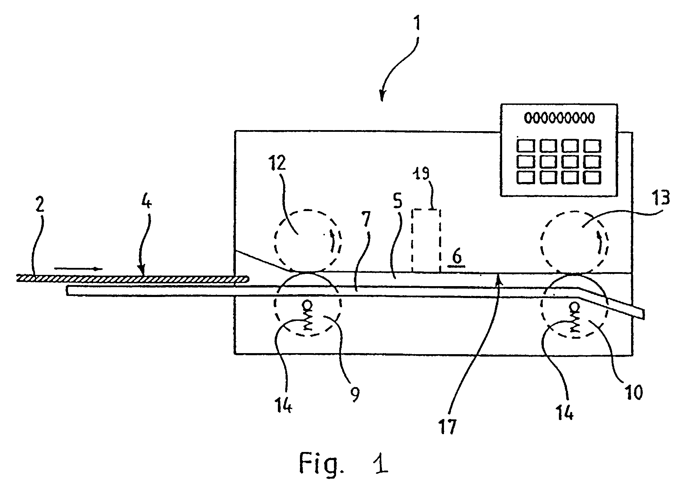

Pour faire passer la lettre 2 dans le couloir 5, on pose la lettre sur la partie de la table 7 qui est en saillie du côté prévu pour l'introduction (côté que l'on voit à gauche en figure 1) puis on fait rentrer la lettre dans le couloir 5, comme montré en figure 1, jusqu'à ce qu'elle soit entraînée par les moyens prévus à cet effet dans la machine 1, l'impression de la marque d'affranchissement s'effectuant automatiquement pendant que la lettre 2 est entraînée dans le couloir 5, la lettre affranchie étant expulsée de la machine à l'autre extrémité du couloir 5 (extrémité que l'on voit à droite en figure 1).

Pour entraîner la lettre 2, la machine 1 comporte deux galets 9 et 10 passant chacun au travers d'une ouverture de la table 7, et deux contre-galets 12 et 13, respectivement pour le galet 9 et pour le galet 10, passant au travers d'une ouverture du support 6.

Les galets 9 et 10 sont montés à rotation par rapport au bâti de la machine 1, par l'intermédiaire de moyens de suspension 14 montrés schématiquement sur la figure 1.

Les contre galets 12 et 13 sont montés à rotation sur le bâti de la machine 1, sans être suspendus par rapport à celui-ci. Un moteur électrique non représenté sert à entraîner en rotation synchrone les contre galets 12 et 13, par exemple par l'intermédiaire d'une courroie (non représentée) qui tourne autour de trois pignons portes respectivement par le moteur, par le contre galet 12 et par le contre galet 13.

Etant donné que les moyens de suspension 14 sollicitent les galets 9 et 10 vers le support 6, et donc vers les contre galets 12 et 13, les galets 9 et 10 sont entraînés par friction sur les contre galets 12 et 13, directement ou par l'intermédiaire d'un objet, tel que la lettre 2, en cours de passage dans la machine 1.

La lettre 2, lorsqu'elle est introduite dans le couloir 5 comme montré sur la figure 1, finit par rencontrer le galet 9 puis le contre galet 12 qui l'entraîne dans le sens indiqué sur la figure 1 par la flèche horizontale orientée de gauche à droite. Simultanément, le galet 9 s'abaisse tandis que la lettre 2 s'introduit entre les galets 9 et 12 de sorte que la lettre 2 progresse dans la machine 1 avec sa face à imprimer 4 qui est plaquée et qui glisse contre la surface 17 du support de glissement 6.

Pour imprimer la marque d'affranchissement à l'emplacement normalisé qui lui correspond et/ou l'adresse de destination à l'emplacement normalisé qui lui correspond, la machine 1 comporte des moyens d'impression 19 montrés très schématiquement sur la figure 1.

D'une façon générale, les moyens d'impression 19 déposent la marque d'affranchissement pendant que la lettre 2 ou l'objet à affranchir circule dans la machine 1 avec sa face à imprimer qui est plaquée contre la surface 17 du support de glissement 6, les moyens 19 étant situés entre les contre-galets 12 et 13.

Dans l'exemple illustré, les moyens d'impression 19 sont montés directement sur le bâti de la machine, et sont donc fixes par rapport au support de glissement 6.

Afin que les moyens d'impression 19 soient commandés en synchronisme avec l'avancement de l'objet dans la machine, il est prévu un détecteur de présence de l'objet (non représenté) qui déclenche un processus d'impression se déroulant automatiquement.

Plus précisément, il existe un premier détecteur de présence qui commande la mise en route du moteur (non représenté) lorsqu'un objet commence à être introduit dans la machine 1, et un deuxième détecteur de présence (non représenté) qui déclenche le processus d'impression lorsque l'objet est parvenu à un emplacement prédéterminé.

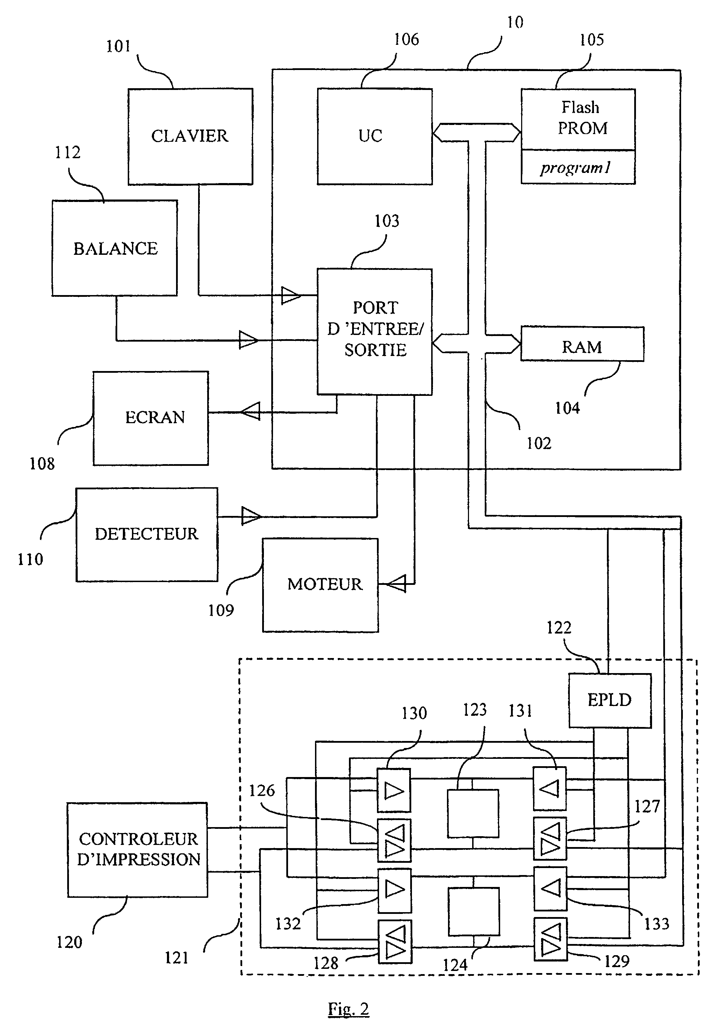

En figure 2, est représenté un circuit électronique de commande du dispositif tel que présenté en figure 1. Ce circuit est illustré sous forme de schéma synoptique et représenté sous référence générale 100. Il comporte, reliés entre eux par un bus d'adresses et de données 102 :
- une unité centrale de traitement 106 ;
- une mémoire vive RAM 104 ;
- une mémoire morte flash PROM 105 ;
- un port d'entrée sortie 103 servant à recevoir :
   - le poids de l'objet postal à affranchir, et
   - la détection de l'objet postal par chacun des détecteurs (non représentés aux figures)
   et à transmettre :
   - des signaux de commande de moteurs, et
   et, indépendamment du bus 102 :
- des moteurs pas-à-pas 109 ;
- des détecteurs de présence 110 ;
- un écran de visualisation 108 relié au port d'entrée/sortie 103 ;
- une balance 112 reliée au port d'entrée/sortie 103 et fournissant des octets représentatifs du poids d'un objet postal ; et
- un clavier 101 relié au port d'entrée/sortie 103 et fournissant des octets représentatifs des touches de clavier successivement utilisées.

Chacun des éléments illustrés en figure 2 est bien connu de l'homme du métier des circuits à microprocesseur et, plus généralement, des systèmes de traitement de l'information. Ces éléments ne sont donc pas décrits ici.

La mémoire vive 104 conserve des données, des variables et des résultats intermédiaires de traitement, dans des registres de mémoire portant, dans la suite de la description, les mêmes noms que les données dont ils conservent les valeurs. La mémoire vive 104 comporte notamment des registres conservant des informations représentatives du poids de l'objet postal à affranchir, le format de l'objet postal en cours de traitement, le nombre d'objets postaux dans le lot en cours de traitement, des valeurs de compteurs ascendant et descendant qui correspondent à des montants d'affranchissement déjà déposés et restant à déposer avant le rechargement de la machine. Ces derniers registres fonctionnent selon des techniques connues dans le domaine des machines à affranchir (au cours de chaque affranchissement, lorsque le montant du compteur descendant est supérieur au montant de la marque d'affranchissement à déposer, il est décrémenté du montant de cette marque et le compteur ascendant est incrémenté du même montant).

La mémoire morte 105 est adaptée à conserver le programme de fonctionnement de l'unité centrale de traitement 106, dans un registre "*program1*", et les données nécessaires au fonctionnement de ce programme.

En fait, la mémoire dite "morte" 105 est une mémoire réinscriptible qui ne s'efface pas lorsque le dispositif est éteint. Elle n'est réinscriptible que selon des procédures sécurisées et seulement par certaines personnes habilitées, si bien que, pour l'utilisateur quotidien, elle apparaît comme une mémoire morte.

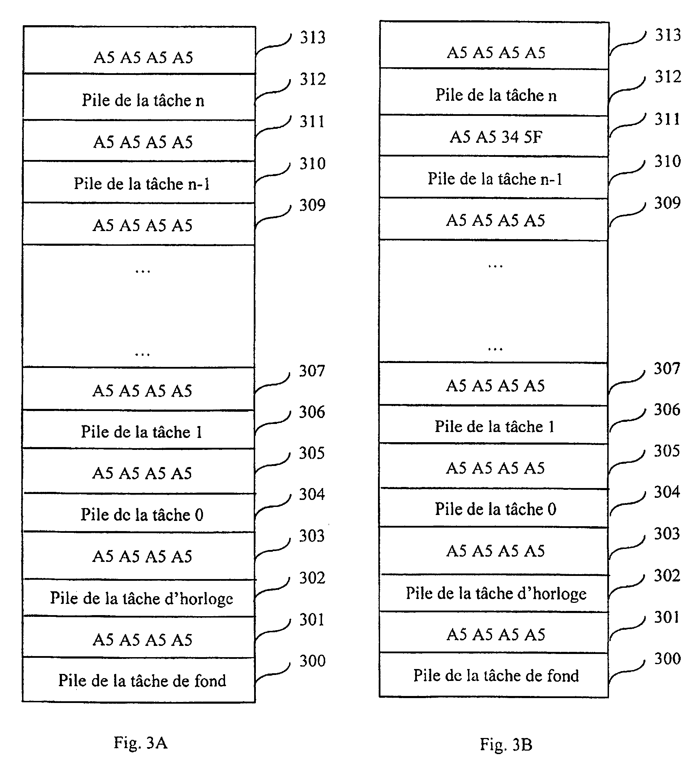

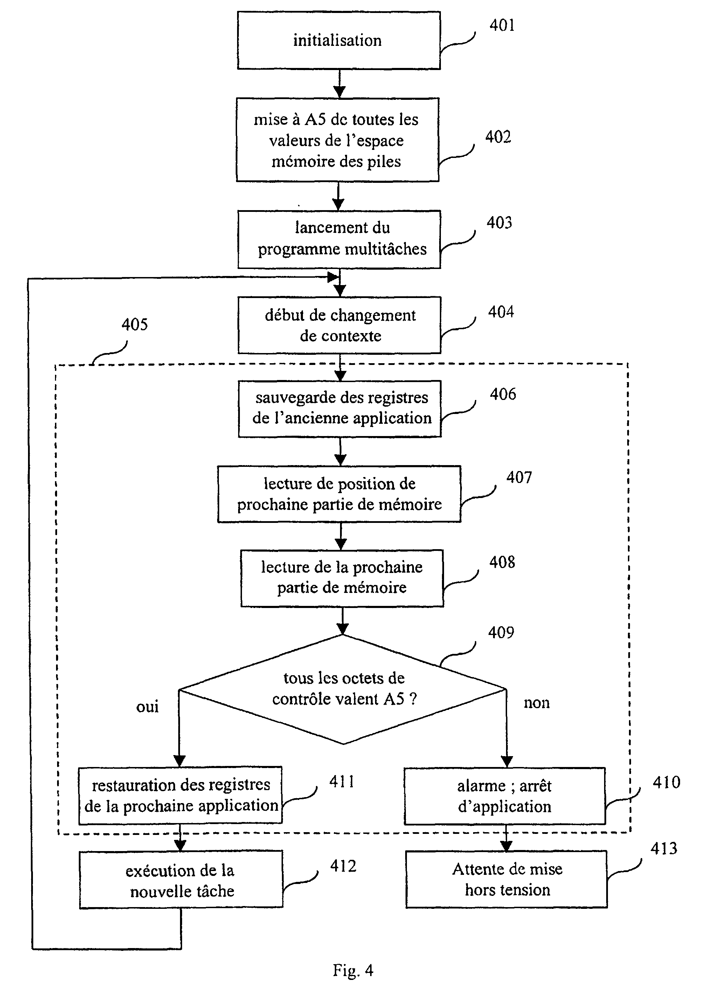

L'unité centrale de traitement 106 est adaptée à mettre en oeuvre l'organigramme décrit en regard de la figure 4 et à organiser la mémoire vive 104, conformément à la figure 3A.

Le programme ou logiciel de la machine à affranchir est un logiciel multitâche, ce qui implique une allocation, par le processeur, d'un espace mémoire, ou pile, associé à chaque tâche. Cet espace mémoire est contenu dans la mémoire vive 104.

Dans le mode de réalisation décrit et représenté, les espaces mémoires alloués à toutes les piles sont alternativement juxtaposés à des parties de mémoire dédiées à la détection, ou surveillance, du débordement des piles.

Dans le tableau suivant, on a représenté, dans l'ordre des adresses mémoires décroissantes, l'ensemble des piles mises en oeuvre par le programme, conformément à l'état de la technique antérieure :
pile de la tâche *n*
pile de la tâche *n*-1
·
·
·
pile de la tâche 1
pile de la tâche 0
pile de la tâche d'horloge
pile de la tâche de fond

On observe que c'est dans le sens vertical descendant que se déplacent les pointeurs de piles, quand on empile, lit ou écrit dans les piles.

On comprend aisément que si une pile déborde, c'est-à-dire si une tâche effectue une écriture en dehors de la pile qui lui est attribuée, une autre pile est perturbée (des données y sont modifiées) et l'ensemble du fonctionnement de la machine à affranchir est perturbé.

Dans le cas des machines à affranchir des valeurs conservées dans ces piles représentent des valeurs "sensibles", comme des sommes d'argent. Il est donc indispensable de garantir l'inviolabilité des piles.

Conformément à la présente invention, au démarrage du programme de l'application, tous les octets de chaque pile sont affectés à une valeur prédéfinie. Cette valeur prédéfinie est choisie à A5, en base hexadécimale, en prenant en compte le fait qu'aucun code ne réside à l'adresse A5A5.

Ensuite, on fixe l'adresse de début de pile pour chaque tâche de l'application. Dans le mode de réalisation décrit et représenté, les quatre premiers octets de chaque pile sont réservés au contrôle du débordement.

Dans le tableau suivant, correspondant à la figure 3A, on a représenté, dans l'ordre des adresses mémoires décroissantes, l'ensemble des piles mises en oeuvre par le programme et des parties de mémoire qui sont destinées à surveiller leur débordement, conformément à l'invention :
quatre octets associés à la pile de la tâche *n* : A5 A5 A5 A5
   pile de la tâche *n*
quatre octets associés à la pile de la tâche *n*-1 : A5 A5 A5 A5
   pile de la tâche *n*-1
quatre octets associés à la pile de la tâche *n*-2 : A5 A5 A5 A5
·
·
·
quatre octets associés à la pile de la tâche 1 : A5 A5 A5 A5
   pile de la tâche 1
quatre octets associés à la pile de la tâche 0 : A5 A5 A5 A5
   pile de la tâche 0
quatre octets associés à la pile de la tâche d'horloge : A5 A5 A5 A5
   pile de la tâche d'horloge
quatre octets associés à la pile de la tâche de fond : A5A5A5A5
   pile de la tâche de fond

Les piles 300, 302, 304, 306, 310 et 312, sont associées à des parties de mémoire 301, 303, 305, 307, 309, 311 et 313 conservant des valeurs prédéterminées.

Un changement de contexte consiste en une action qui interrompt l'exécution d'une tâche pour activer l'exécution d'une autre tâche. Cette opération est menée par le noyau du programme multitâche. Les fonctions du noyau permettent d'exécuter une routine spécifique (routine dite « de Hook », non interne au noyau) pendant un changement de contexte.

La routine de « Hook » est une portion de code qui est appelée par le noyau pendant un changement de contexte. A l'appel de la routine de « Hook » par le noyau, la tâche courante est la nouvelle tâche. En d'autres termes, le contexte en cours est le contexte de la nouvelle tâche (la pile courante est la pile de la nouvelle tâche).

Dans le cadre de l'invention, cette routine est dédiée au contrôle de l'intégrité de la pile de la nouvelle tâche (c'est-à-dire la tâche active à l'issue du changement de contexte). La routine vérifie la valeur des octets de contrôle de la pile de la nouvelle tâche.

La détection d'un débordement de pile consiste, dans le mode de réalisation décrit et représenté, à vérifier que les quatre octets qui précédent la pile liée à la nouvelle tâche contiennent toujours les valeurs qui y avaient été écrites (A5A5A5A5). Si tous les octets contrôlés n'ont pas la valeur prédéterminée qui y avait été écrite, un débordement de la pile située au dessus de la pile associé à la nouvelle tâche, est détecté.

A titre d'exemple, dans le tableau suivant, correspondant à la figure 3B, on a représenté, dans l'ordre des adresses mémoires décroissantes, l'ensemble des piles mises en oeuvre par le programme et des parties de mémoire qui sont destinées à surveiller leur débordement, lorsque la pile *n* 312 a débordé vers la pile *n*-1 310, en provoquant l'écriture des codes hexadécimaux 34 et 5F pour les deux premiers des quatre octets de la partie de mémoire 311 qui est associée à la pile *n*-1 310 :
quatre octets associés à la pile de la tâche *n :* A5 A5 A5 A5
   pile de la tâche n
quatre octets associés à la pile de la tâche *n*-1 : 34 5F A5 A5
   pile de la tâche n-1
quatre octets associés à la pile de la tâche *n-2 :* A5 A5 A5 A5
·
·
·
quatre octets associés à la pile de la tâche 1 : A5 A5 A5 A5
   pile de la tâche 1
quatre octets associés à la pile de la tâche 0 : A5 A5 A5 A5
   pile de la tâche 0
quatre octets associés à la pile de la tâche d'horloge : A5 A5 A5 A5
   pile de la tâche d'horloge
quatre octets associés à la pile de la tâche de fond : A5 A5 A5 A5
   pile de la tâche de fond

Au cours d'une opération d'initialisation 401, l'unité centrale 106 effectue l'initialisation des valeurs conservées dans la mémoire vive 104.

Au cours d'une opération 402, l'unité centrale 106 effectue l'initialisation de tout l'espace mémoire destiné aux piles et aux parties de mémoire associées, en y plaçant les valeurs hexadécimales A5.

Puis, au cours d'une opération 403, l'exécution du programme multitâches est lancée par l'exécution d'une première tâche et la mise en oeuvre d'un séquenceur de tâches.

Ensuite, à chaque début de changement de contexte 404, une routine de Hook 405 est effectuée. Cette routine 405 comporte successivement :
- une opération 406 de sauvegarde des registres de l'application en entrée de routine (la tâche précédente, c'est-à-dire celle qui était active avant le début du changement de contexte) ;
- une opération 407 de lecture de la position du début de la partie de mémoire qui est associée à la pile de la nouvelle tâche (celle qui sera active à la fin du changement de contexte),
- une opération 408 de lecture des octets placés aux quatre premières adresses en partant, en décroissant de l'adresse obtenue au cours de l'opération 407,
- un test 409 au cours duquel l'unité centrale 106 détermine si chacun des octets lus possède la valeur A5, en hexadécimal, ou non,
- une opération d'arrêt d'application 410 et de déclenchement d'alarme qui est effectuée lorsque le résultat du test 409 est négatif et à la suite duquel le programme attend une mise hors tension 413 de la machine à affranchir, et
- une opération 411 de restauration des registres de l'application en sortie de routine.

A la fin de la routine 405, au cours de l'opération 412, la nouvelle tâche est exécutée jusqu'au prochain changement de contexte.

En variante non représentée, à la fin de l'exécution d'une tâche, on vérifie la valeur des octets de la partie de mémoire associée à la pile suivante, pour vérifier que la pile de la tâche qui vient de s'exécuter n'a pas débordé vers la pile qui lui succède.

Selon une autre variante non représentée, la partie de mémoire destinée à la détection du débordement d'une pile est mitoyenne de la pile suivante, dans l'ordre d'écriture de la pile à laquelle est associée ladite partie de mémoire, sans être mitoyenne de la pile surveillée.

Selon une autre variante non représentée, la partie de mémoire destinée à la détection du débordement d'une pile est mitoyenne de la pile surveillée, sans être mitoyenne de la pile suivante, dans l'ordre d'écriture de la pile à laquelle est associée ladite partie de mémoire.

## Revendications

1. Procédé de détection de débordement d'au moins une pile (300, 302, 304, 306, 310, 312), espace mémoire réservé à une partie d'un programme d'ordinateur, **caractérisé en ce qu'**il comporte :
- pour chaque pile surveillée, une opération d'attribution (402) de valeurs prédéterminées à une partie de mémoire (301, 303, 305, 307, 309, 311, 313) qui, dans l'ordre d'écriture de ladite pile, succède à ladite pile, et
- à chaque mise en oeuvre d'une partie de programme associée à ladite pile (404), une opération de lecture (407, 408) de valeurs présentes dans ladite partie de mémoire et une opération de vérification de valeurs lues (409),
**en ce que** ledit programme est multitâche, chaque tâche étant associée à une pile
et **en ce que**, à chaque changement de contexte (404), une routine de type hook (405) est effectuée afin que les opérations de lecture et de vérification puissent être effectuées sur la partie de mémoire associée à la pile de la tâche qui va être mise en oeuvre.

2. Procédé de détection de débordement d'au moins une pile (300, 302, 304, 306, 310, 312), espace mémoire réservé à une partie d'un programme d'ordinateur, **caractérisé en ce qu'**il comporte :
- pour chaque pile surveillée, une opération d'attribution (402) de valeurs prédéterminées à une partie de mémoire (301, 303, 305, 307, 309, 311, 313) qui, dans l'ordre d'écriture de ladite pile, succède à ladite pile, et
- à chaque mise en oeuvre d'une partie de programme associée à ladite pile (404), une opération de lecture (407, 408) de valeurs présentes dans ladite partie de mémoire et une opération de vérification de valeurs lues (409),
**en ce que** ledit programme est multitâche, chaque tâche étant associée à une pile
et **en ce que**, à chaque changement de contexte (404), une routine de type hook (405) est effectuée afin que les opérations de lecture et de vérification puissent être effectuées sur la partie de mémoire associée à la pile qui suit, dans l'ordre d'écriture des piles, la pile de la tâche dont la mise en oeuvre vient d'être interrompue.

3. Procédé selon la revendication 1 ou 2, **caractérisé en ce que**, au cours de l'opération d'attribution (402), la partie de mémoire (305) associée à une pile (304) lui est mitoyenne.

4. Procédé selon l'une quelconque des revendications 1 à 3, **caractérisé en ce que**, au cours de l'opération d'attribution (402), la partie de mémoire (305) associée à une pile (304) est mitoyenne de la pile suivante (306), dans l'ordre d'écriture de la pile à laquelle est associée ladite partie de mémoire.

5. Procédé selon l'une quelconque des revendications 1 à 4, **caractérisées en ce que** lesdites valeurs prédéterminées sont égales entre elles.

6. Procédé selon l'une quelconque des revendications 1 à 5, **caractérisées en ce que** lesdites valeurs prédéterminées sont différentes de toutes les valeurs prises par les codes informatiques dudit programme ou de toutes les valeurs utilisées dans les piles.

7. Procédé selon l'une quelconque des revendications 1 à 6, **caractérisé en ce que** lorsque, au cours de l'opération de vérification (409), il est déterminé qu'au moins une valeur lue a été modifiée, au cours d'une opération de modification de programme (410), la mise en oeuvre de chaque partie de programme relative à la pile associée à la partie de mémoire qui a été lue est suspendue.

8. Procédé selon l'une quelconque des revendications 1 à 7, **caractérisé en ce que** lorsque, au cours de l'opération de vérification (409), il est déterminé qu'au moins une valeur lue a été modifiée, au cours d'une opération de modification de programme (410), la mise en oeuvre de chaque partie de programme relative à la pile qui succède, dans l'ordre d'écriture des piles, à la pile associée à la partie de mémoire lue, est suspendue.

9. Dispositif (10) de détection de débordement d'au moins une pile (300, 302, 304, 306, 310, 312), espace mémoire réservé à une partie d'un programme d'ordinateur, **caractérisé en ce qu'**il comporte un moyen de traitement (106) adapté,
- pour chaque pile surveillée, à attribuer des valeurs prédéterminées à une partie de mémoire (301, 303, 305, 307, 309, 311, 313) qui, dans l'ordre d'écriture de ladite pile, succède à ladite pile, et
- à chaque mise en oeuvre d'une partie de programme associée à ladite pile, à lire des valeurs présentes dans ladite partie de mémoire et à vérifier des valeurs lues,
et **en ce que** le moyen de traitement (106) est adapté, d'une part, à mettre en oeuvre un programme multitâche, chaque tâche étant associée à une pile et, d'autre part, à chaque changement de contexte (404), à effectuer une routine de type hook (405) de façon à pouvoir lire et vérifier des valeurs de la partie de mémoire associée à la pile de la tâche qui va être mise en oeuvre.

10. Dispositif (10) de détection de débordement d'au moins une pile (300, 302, 304, 306, 310, 312), espace mémoire réservé à une partie d'un programme d'ordinateur, **caractérisé en ce qu'**il comporte un moyen de traitement (106) adapté,
- pour chaque pile surveillée, à attribuer des valeurs prédéterminées à une partie de mémoire (301, 303, 305, 307, 309, 311, 313) qui, dans l'ordre d'écriture de ladite pile, succède à ladite pile, et
- à chaque mise en oeuvre d'une partie de programme associée à ladite pile, à lire des valeurs présentes dans ladite partie de mémoire et à vérifier des valeurs lues,
et **en ce que** le moyen de traitement (106) est adapté, d'une part, à mettre en oeuvre un programme multitâche, chaque tâche étant associée à une pile et, d'autre part, à chaque changement de contexte (404), à effectuer une routine de type hook (405) de façon à pouvoir lire et vérifier des valeurs de la partie de mémoire associée à la pile qui suit, dans l'ordre d'écriture des piles, la pile de la tâche dont la mise en oeuvre vient d'être interrompue.

11. Dispositif selon la revendication 9 ou 10, **caractérisé en ce que** le moyen de traitement (106) est adapté à attribuer à une pile (304) une partie de mémoire (305) qui lui est mitoyenne.

12. Dispositif selon l'une quelconque des revendications 9 à 11, **caractérisé en ce que** le moyen de traitement (106) est adapté à attribuer à une pile (304) une partie de mémoire (305) qui est mitoyenne de la pile suivante (306), dans l'ordre d'écriture de la pile à laquelle est associée ladite partie de mémoire.

13. Dispositif selon l'une quelconque des revendications 9 à 12, **caractérisées en ce que** le moyen de traitement (106) est adapté à ce que lesdites valeurs prédéterminées soient égales entre elles.

14. Dispositif selon l'une quelconque des revendications 9 à 13, **caractérisées en ce que** le moyen de traitement (106) est adapté à ce que lesdites valeurs prédéterminées soient différentes de toutes les valeurs prises par les codes informatiques dudit programme ou de toutes les valeurs utilisées dans les piles.

15. Dispositif selon l'une quelconque des revendications 9 à 14, **caractérisé en ce que** le moyen de traitement (106) est adapté, lorsqu'il a déterminé qu'au moins une valeur lue a été modifiée, à modifier l'exécution du programme, la mise en oeuvre de chaque partie de programme relative à la pile associée à la partie de mémoire qui a été lue étant suspendue (410).

16. Dispositif selon l'une quelconque des revendications 9 à 15, **caractérisé en ce que** le moyen de traitement (106) est adapté, lorsqu'il a déterminé qu'au moins une valeur lue a été modifiée, à modifier l'exécution du programme, la mise en oeuvre de chaque partie de programme relative à la pile qui succède, dans l'ordre d'écriture des piles, à la pile associée à la partie de mémoire lue, étant suspendue (410).

17. Machine à affranchir (1), **caractérisée en ce qu'**elle comporte un dispositif selon l'une quelconque des revendications 9 à 16.

## Claims

1. Method of detecting overflow of at least one stack (300, 302, 304, 306, 310, 312), a memory space reserved for part of a computer program, **characterised in that** it comprises:
- for each stack monitored, an operation (402) of allocating predetermined values to a memory part (301, 303, 305, 307, 309, 311, 313) which, in the order of writing to the said stack, follows on from the said stack, and
- each time a program part associated with the said stack (404) is used, an operation (407, 408) of reading values present in said memory part and an operation of verifying values read (409),
**in that** the said program is multitask, each task being associated with a stack
and **in that**, at each change of context (404), a routine of the hook type (405) is performed so that the reading and verification operations can be performed on the memory part associated with the stack of the task which will be implemented.

2. Method of detecting overflow of at least one stack (300, 302, 304, 306, 310, 312), a memory space reserved for part of a computer program, **characterised in that** it comprises:
- for each stack monitored, an operation (402) of allocating predetermined values to a memory part (301, 303, 305, 307, 309, 311, 313) which, in the order of writing to the said stack, follows on from the said stack, and
- each time a program part associated with the said stack (404) is used, an operation (407, 408) of reading values present in said memory part and an operation of verifying values read (409),
**in that** the said program is multitask, each task being associated with the stack
and **in that**, at each change of context (404), a routine of the hook type (405) is performed so that the reading and verification operations can be performed on the memory part associated with the stack which, in the order of writing to the stacks, follows on from the stack of the task whose implementation has just been interrupted.

3. Method according to Claim 1 or 2, **characterised in that**, during the allocation operation (402), the memory part (305) associated with a stack (304) is adjacent to it.

4. Method according to one of Claims 1 to 3, **characterised in that**, during the allocation operation (402), the memory part (305) associated with a stack (304) is adjacent to the following stack (306), in the order of writing to the stack with which the said memory part is associated.

5. Method according to any one of Claims 1 to 4, **characterised in that** said predetermined values are equal to each other.

6. Method according to any one of Claims 1 to 5, **characterised in that** said predetermined values are different from all the values taken by the computer codes of the said program or from all the values used in the stacks.

7. Method according to any one of Claims 1 to 6, **characterised in that** when, during the verification operation (409), it is determined that at least one value read has been modified, during a program modification operation (410), the use of each program part relating to the stack associated with the memory part which has been read is suspended.

8. Method according to any one of Claims 1 to 7, **characterised in that** when, during the verification operation (409), it is determined that at least one value read has been modified, during a program modification operation (410), the use of each program part relating to the stack which, in the order of writing to the stacks, follows on from the stack associated with the memory part read, is suspended.

9. Device (10) for detecting overflow of at least one stack (300, 302, 304, 306, 310, 312), a memory space reserved for part of a computer program, **characterised in that** it comprises a processing means (106) adapted,
- for each stack monitored, to allocate predetermined values to a memory part (301, 303, 305, 307, 309, 311, 313) which, in the order of writing to the said stack, follows on from the said stack, and
- each time a program part associated with the said stack is used, reading values present in the said memory part and verifying values read,
and **in that** the processing means (106) is adapted on the one hand to use a multitask program, each task being associated with a stack and in addition, at each change in context (404), to effect a routine of the hook type (405) so as to be able to read and verify values of the memory part associated with the stack of the task which will be used.

10. Device (10) for detecting overflow of at least one stack (300, 302, 304, 306, 310, 312), a memory space reserved for part of a computer program, **characterised in that** it comprises a processing means (106) adapted,
- for each stack monitored, to allocate predetermined values to a memory part (301, 303, 305, 307, 309, 311, 313) which, in the order of writing to the said stack, follows on from the said stack, and
- each time a program part associated with the said stack is used, reading values present in the said memory part and verifying values read,
and **in that** the processing means (106) is adapted on the one hand to use a multitask program, each task being associated with a stack and in addition, at each change in context (404), to effect a routine of the hook type (405) so as to be able to read and verify values of the memory part associated with the stack which, in the order of writing to the stacks, follows the stack of the task whose use has just been interrupted.

11. Device according to Claim 9 or 10, **characterised in that** the processing means (106) is adapted to allocate to a stack (304) a memory part (305) which is adjacent to it.

12. Device according to any one of Claims 9 to 11, **characterised in that** the processing means (106) is adapted to allocate to a stack (304) a memory part (305) which is adjacent to the following stack (306), in the order of writing to the stack with which the said memory part is associated.

13. Device according to any one of Claims 9 to 12, **characterised in that** the processing means (106) is adapted so that the said predetermined values are equal to each other.

14. Device according to any one of Claims 9 to 13, **characterised in that** the processing means (106) is adapted so that the said predetermined values are different from all the values taken by the computer codes of the said program or all the values used in the stacks.

15. Device according to any one of Claims 9 to 14, **characterised in that** the processing means (106) is adapted, when it has determined that at least one value read has been modified, to modify the execution of the program, the use of each program part relating to the stack associated with the memory part which has been read being suspended (401).

16. Device according to one of Claims 9 to 15, **characterised in that** the processing means (106) is adapted, when it has determined that at least one value read has been modified, to modify the execution of the program, the use of each program part relating to the stack which, in the order of writing to the stacks, follows on from the stack associated with the memory part read, being suspended (410).

17. Franking machine (1), **characterised in that** it comprises a device according to any one of Claims 9 to 16.

## Patentansprüche

1. Verfahren zum Erfassen eines Überlaufens mindestens eines Stapels (300, 302, 304, 306, 310, 312), mit einem in einem Computerteilprogramm reservierten Speicherplatz, **dadurch gekennzeichnet, dass** es:
- für jeden überwachten Stapel eine Zuweisungsoperation (402) vorbestimmter Werte an einen Speicherbereich (301, 303, 305, 307, 309, 311, 313), der in der Reihenfolge der Schreiboperation des Stapels dem Stapel folgt, und
- bei jedem Einsatz eines mit dem Stapel (404) verknüpften Teilprogrammes eine Leseoperation (407, 408) der in dem Speicherbereich erscheinenden Werte sowie eine Prüfoperation der eingelesenen Werte (409) umfaßt,
dass das Programm mehrprozessig ist, wobei jeder Prozeß mit einem Stapel verknüpft ist, und dass bei jeder Änderung des Kontextes (404) eine Routine des Hooktyps (405) durchgeführt wird, damit die Lese- und Prüfoperationen in dem Speicherbereich durchgeführt werden können, welcher mit dem Prozeßstapel verknüpft ist, der eingesetzt werden wird.

2. Verfahren zum Erfassen eines Überlaufens mindestens eines Stapels (300, 302, 304, 306, 310, 312), mit einem in einem Computerteilprogramm reservierten Speicherplatz, **dadurch gekennzeichnet, dass** es:
- für jeden überwachten Stapel eine Zuweisungsoperation (402) vorbestimmter Werte an einen Speicherbereich (301, 303, 305, 307, 309, 311, 313), der in der Reihenfolge der Schreiboperation des Stapels dem Stapel folgt, und
- bei jedem Einsatz eines mit dem Stapel (404) verknüpften Teilprogrammes eine Leseoperation (407, 408) der in dem Speicherbereich erscheinenden Werte sowie eine Prüfoperation der eingelesenen Werte (409) umfaßt,
dass das Programm mehrprozessig ist, wobei jeder Prozeß mit einem Stapel verknüpft ist, und dass bei jeder Änderung des Kontextes (404) eine Routine des Hooktyps (405) durchgeführt wird, damit die Lese- und Prüfoperationen in dem Speicherbereich durchgeführt werden können, welcher mit dem Stapel verknüpft ist, der in der Reihenfolge der Schreiboperationen der Stapel dem Prozeßstapel folgt, dessen Einsatz unterbrochen werden wird.

3. Verfahren nach Anspruch 1 oder 2, **dadurch gekennzeichnet, dass** während der Zuweisungsoperation (402) der mit einem Stapel (304) verknüpfte Speicherbereich (305) an diesen angrenzt.

4. Verfahren nach einem der Ansprüche 1 bis 3, **dadurch gekennzeichnet, dass** während der Zuweisungsoperation (402) der mit einem Stapel (304) verknüpfte Speicherbereich (305) an den Stapel (306) angrenzt, der in der Reihenfolge der Schreiboperationen der Stapel dem folgt, mit dem der Speicherbereich (305) verknüpft ist.

5. Verfahren nach einem der Ansprüche 1 bis 4, **dadurch gekennzeichnet, dass** die vorbestimmten Werte untereinander gleich sind.

6. Verfahren nach einem der Ansprüche 1 bis 5, **dadurch gekennzeichnet, dass** sich die vorbestimmten Werte gegenüber allen Werten, die als Datenverarbeitungscodes des Programmes verwendet werden, oder gegenüber allen in den Stapeln verwendeten Werten unterscheiden.

7. Verfahren nach einem der Ansprüche 1 bis 6, **dadurch gekennzeichnet, dass**, wenn während der Prüfoperation (409) erfaßt wird, dass mindestens ein eingelesener Wert verändert worden ist, während einer Änderungsoperation des Programms (410) der Einsatz jedes Programmteils bezüglich des Stapels unterbrochen wird, der mit dem eingelesenen Speicherbereich verknüpft ist.

8. Verfahren nach einem der Ansprüche 1 bis 7, **dadurch gekennzeichnet, dass**, wenn während der Prüfoperation (409) erfaßt wird, dass mindestens ein eingelesener Wert verändert worden ist, während einer Änderungsoperation des Programms (410) der Einsatz jedes Programmteils bezüglich des Stapels unterbrochen wird, der in der Reihenfolge der Schreiboperationen der Stapel dem Stapel folgt, der mit dem eingelesenen Speicherbereich verknüpft ist.

9. Vorrichtung zum Erfassen eines Überlaufens mindestens eines Stapels (300, 302, 304, 306, 310, 312), mit einem in einem Computerteilprogramm reservierten Speicherplatz, **dadurch gekennzeichnet, dass** sie ein Verarbeitungsmittel (106) aufweist, welches dazu ausgelegt ist:
- für jeden überwachten Stapel vorbestimmte Werte einem Speicherbereich (301, 303, 305, 307, 309, 311, 313) zuzuweisen, welcher in der Reihenfolge der Schreiboperationen der Stapel dem Stapel folgt, und
- bei jedem Einsatz eines mit dem Stapel (404) verknüpften Teilprogramms in dem Speicherbereich erscheinende Werte einzulesen sowie die eingelesenen Werte zu prüfen,
und dass das Verarbeitungsmittel (106) dazu ausgelegt ist, einerseits ein mehrprozessiges Programm einzusetzen, wobei jeder Prozeß mit einem Stapel verknüpft ist, und andererseits bei jeder Änderung des Kontextes (404) eine Routine des Hooktyps (405) derart durchzuführen, dass die Werte in dem Speicherbereich gelesen und geprüft werden können, welcher mit dem Prozeßstapel verknüpft ist, der eingesetzt werden wird.

10. Vorrichtung zum Erfassen eines Überlaufens mindestens eines Stapels (300, 302, 304, 306, 310, 312), mit einem in einem Computerteilprogramm reservierten Speicherplatz, **dadurch gekennzeichnet, dass** sie ein Verarbeitungsmittel (106) aufweist, welches dazu ausgelegt ist:
- für jeden überwachten Stapel vorbestimmte Werte einem Speicherbereich (301, 303, 305, 307, 309, 311, 313) zuzuweisen, welcher in der Reihenfolge der Schreiboperationen der Stapel dem Stapel folgt, und
- bei jedem Einsatz eines mit dem Stapel (404) verknüpften Teilprogramms in dem Speicherbereich erscheinende Werte einzulesen sowie die eingelesenen Werte zu prüfen,
und dass das Verarbeitungsmittel (106) dazu ausgelegt ist, einerseits ein mehrprozessiges Programm einzusetzen, wobei jeder Prozeß mit einem Stapel verknüpft ist, und andererseits bei jeder Änderung des Kontextes (404) eine Routine des Hooktyps (405) derart durchzuführen, dass die Werte in dem Speicherbereich gelesen und geprüft werden können, welcher mit dem Stapel verknüpft ist, der in der Reihenfolge der Schreiboperationen der Stapel dem Prozeßstapel folgt, dessen Einsatz unterbrochen werden wird.

11. Vorrichtung nach Anspruch 9 oder 10, **dadurch gekennzeichnet, dass** das Verarbeitungsmittel dazu ausgelegt ist, einem Stapel (304) einen Speicherbereich (305) zuzuordnen, der an diesen angrenzt.

12. Vorrichtung nach einem der Ansprüche 9 bis 11, **dadurch gekennzeichnet, dass** das Verarbeitungsmittel (106) dazu ausgelegt ist, einem Stapel (304) einen Speicherbereich (305) zuzuordnen, der an den Stapel (306) angrenzt, welcher in der Reihenfolge der Schreiboperationen dem Stapel folgt, mit dem der Speicherbereich (305) verknüpft ist.

13. Vorrichtung nach einem der Ansprüche 9 bis 12, **dadurch gekennzeichnet, dass** das Verarbeitungsmittel (106) derart ausgelegt ist, dass die vorbestimmten Werte untereinander gleich sind.

14. Vorrichtung nach einem der Ansprüche 9 bis 13, **dadurch gekennzeichnet, dass** das Verarbeitungsmittel (106) derart ausgelegt ist, dass sich die vorbestimmten Werte gegenüber allen Werten, die als Datenverarbeitungscodes des Programmes verwendet werden, oder gegenüber allen in den Stapeln verwendeten Werten unterscheiden.

15. Vorrichtung nach einem der Ansprüche 9 bis 14, **dadurch gekennzeichnet, dass** das Verarbeitungsmittel (106) derart ausgelegt ist, dass die Programmausführung zu ändern, wenn es erfaßt, dass mindestens ein eingelesener Wert verändert worden ist, indem der Einsatz jedes Programmteils bezüglich des Stapels unterbrochen wird (410), der mit dem eingelesenen Speicherbereich verknüpft ist.

16. Vorrichtung nach einem der Ansprüche 9 bis 15, **dadurch gekennzeichnet, dass** das Verarbeitungsmittel (106) dazu ausgelegt ist, dass die Programmausführung zu ändern, wenn es erfaßt, dass mindestens ein eingelesener Wert verändert worden ist, indem der Einsatz jedes Programmteils bezüglich des Stapels unterbrochen wird (410), der in der Reihenfolge der Schreiboperationen der Stapel dem Stapel folgt, der mit dem eingelesenen Speicherbereich verknüpft ist.

17. Frankiermaschine (1), **dadurch gekennzeichnet, dass** sie eine Vorrichtung nach einem der Ansprüche 9 bis 16 umfaßt.
